# EUROPÄISCHE PATENTSCHRIFT

(11) **EP 1 083 090 B1**
(45) Veröffentlichungstag und Bekanntmachung des Hinweises auf die Patenterteilung: **16.04.2008**
(21) Anmeldenummer: 00117978.7
(22) Anmeldetag: 22.08.2000
(51) Int. Cl.: B60Q 3/04, B60Q 3/00

(54) **Lichtleiterpilz**
Light conductor with a mushroom form
Conducteur de lumière en forme de champignon

(30) Priorität: 11.09.1999 DE 19943589
(43) Veröffentlichungstag der Anmeldung: 14.03.2001
(73) Patentinhaber: Preh GmbH, 97616 Bad Neustadt a.d. Saale (DE)
(72) Erfinder: Glienicke, Heiko, 97616 Bad Neustadt (DE)
(74) Vertreter: Dietrich, Barbara

(56) Entgegenhaltungen:
- EP-A- 0 780 265
- DE-A1- 19 712 294
- GB-A- 2 324 364
- US-A- 2 254 961

## Beschreibung

Die Erfindung betrifft einen Lichtleiterpilz.

Ein derartiger Lichtleiterpilz ist beispielsweise in dem Drehwiderstand der DE 197 12 294 verwendet, wobei dieser Lichtleiter mit dem Betätigungsknopf verbunden ist und in der Drehmitte eine Lichteintrittsfläche aufweist, vor der eine Lichtquelle angeordnet ist. Der Lichtleitkörper endet mit seinem Umfangsteil in einem transparenten Gehäuseteil, das eine von außen sichtbare Skala aufweist.

Es hat sich jedoch gezeigt, daß diese Anordnung eine unzureichende Ausleuchtung bewirkt, so daß Bedarf nach einer Verbesserung bestand.

Hiervon ausgehend war es Aufgabe der Erfindung, Maßnahmen für eine Verbesserung der Ausleuchtung aufzufinden.

Diese Aufgabe ist bei einem gattungsgemäßen Lichtleiterpilz durch die im Patentanspruch 1 genannten Merkmale gelöst, wobei der Unteranspruch eine vorteilhafte Weiterbildung angibt.

Ein Ausführungsbeispiel eines Lichtleiterpilzes ist in der Zeichnung dargestellt und wird nachfolgend beschrieben.

Die Zeichnung zeigt:
- Fig. 1: einen Schnitt eines Lichtleiterpilzes,
- Fig. 2: eine Vergrößerung aus Fig. 1.

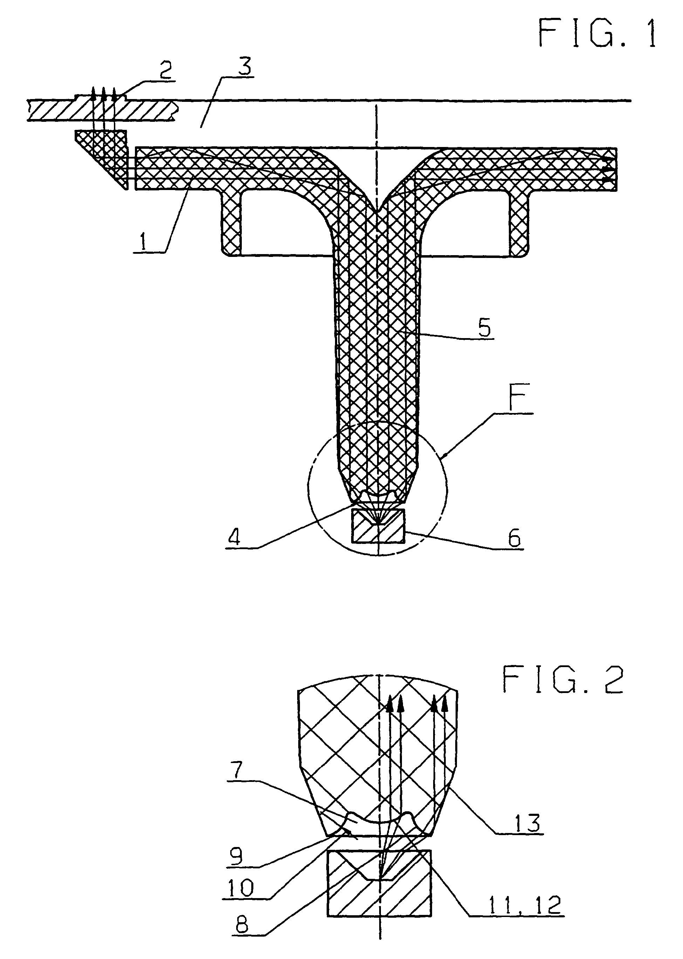

Fig. 1 zeigt schematisch einen Schnitt durch einen Lichtleiterpilz 1 für eine homogene Ausleuchtung einer kreisförmigen Skala 2 eines Kraftfahrzeugbedienteils 3 mittels eines gegenüber einer Lichteinkoppelfläche 4 des Pilzzapfens 5 angeordneten Lichtquelle 6 (LED).

Bei diesem Lichtleiterpilz 1 ist nun vorgesehen, daß die Lichteinkoppelfläche 4 eine zylindrische Ausnehmung 7 aufweist, wobei die Kante der Mantelfläche 8 und 9 der zylindrischen Ausnehmung 7 umlaufend mit einem Radius R 10 gerundet ist und deren Grundfläche 11 als Kugelfläche ausgebildet ist, d. h. eine mittig hervorragende Kugelkalotte 12 bildet, wobei der Pilzzapfen 5 einen konischen Endabschnitt 13 aufweist. Sofern der Radius 10, die Größe der Kugelkalotte 12 und der Konus des Endabschnitts 13 nicht konstruktiv bestimmt werden können, werden diese empirisch optimiert.

Bei der Lichtquelle 6 handelt es sich vorteilhafterweise um ein LED mit großem Abstrahlwinkel, Die erfinderische Ausbildung der Lichteinkoppelfläche 4 bewirkt eine Parallelisierung der Lichtstrahlen (Pfeile) im Lichtleiterpilz 1, so daß die Lichtumlenkung und Lichtausbeute gegenüber dem bekannten Lichtleiterpilz wesentlich gesteigert wird, so daß eine verbesserte Ausleuchtung der Skala 2 erreicht ist.

Es versteht sich von selbst, daß die Lichteinkoppelfläche 4 auch aus mehreren Segmenten (nicht dargestellt) zusammengesetzt sein kann, deren Flächen, gerade oder gerundet ausgeführt, sich zu einem Kreis fügen. Sinngemäß können die Segmente auch komplex geformt sein und aus einer Vielzahl einen Kreis bilden.

## Patentansprüche

1. Lichtleiterpilz für eine homogene Ausleuchtung einer kreisförmigen Skala (8) eines Kraftfahrzeugbedienteils mittels eines gegenüber einer Lichteinkoppelfläche des Pilzzapfens (5) angeordneten Lichtquelle (6), **dadurch gekennzeichnet, dass** die Lichteinkoppelfläche (4) eine zylindrische Ausnehmung (7) aufweist, wobei die Kante der Mantelfläche (8, 9) der zylindrischen Ausnehmung (7) umlaufend mit einem Radius R (10) gerundet ist und wobei die Grundfläche (11) der zylindrischen Ausnehmung (7) als Kugelfläche ausgebildet ist, das heißt eine mittig hervorragende Kugelkalotte (12) bildet, wobei der Pilzzapfen (5) einen konischen Endabschnitt (13) aufweist.

## Claims

1. Fibreoptic conductor with a mushroom form for homogeneous illumination of a circular dial (8) of a motor vehicle control part by means of a light source (6), which is arranged opposite a light-entry surface of the mushroom pin (5), **characterized in that** the light-entry surface (4) has a cylindrical cutout (7), the edge of the outer surface (8, 9) of the cylindrical cutout (7) being rounded circumferentially with a radius R (10), and the base (11) of the cylindrical cutout (7) being in the form of a spherical face, i.e. forming a centrally protruding spherical cap (12), the mushroom pin (5) having a conical end section (13).

## Revendications

1. Conducteur de lumière en forme de champignon pour un éclairage homogène d'une échelle de forme circulaire (8) d'une partie de commande d'un véhicule automobile au moyen d'une source de lumière (6) disposée en regard d'une surface d'injection de lumière du pied du champignon (5), **caractérisé en ce que** la surface d'injection de lumière (4) présente un évidement cylindrique (7), l'arête de la surface d'enveloppe (8, 9) de l'évidement cylindrique (7) étant arrondie tout autour avec un rayon R (10) et la surface de base (11) de l'évidement cylindrique (7) étant réalisée sous forme de surface sphérique, c'est-à-dire qu'elle forme une calotte saillant centralement (12), le pied du champignon (5) présentant une portion d'extrémité conique (13).
